# EUROPÄISCHE PATENTANMELDUNG

(11) **EP 4 745 416 A1**
(43) Veröffentlichungstag der Anmeldung: **20.05.2026**
(21) Anmeldenummer: 25216551.9
(22) Anmeldetag: 18.11.2025
(51) Int. Cl.: F16B 11/00, B60J 1/00

(54) **FAHRZEUG MIT EINER SICHERHEITSSCHEIBE AUS KUNSTSTOFF, VERFAHREN ZUM HERSTELLEN EINES FAHRZEUGS, UND NACHRÜSTSATZ**

(30) Priorität: 19.11.2024 DE 102024133773
(71) Anmelder: KRD Sicherheitstechnik GmbH, 21502 Geesthacht (DE)
(72) Erfinder: BRAMMER, Beate Korinna, 21502 Geesthacht (DE); TRETTER, Matthias, 21502 Geesthacht (DE)
(74) Vertreter: Noack, Andreas

(57) **Zusammenfassung**

Vorgestellt wird ein Fahrzeug (1) mit einer Sicherheitsscheibe (2, 3, 4, 5, 6, 51) aus Kunststoff, die in eine Fensteröffnung des Fahrzeugs eingesetzt ist, wobei die Sicherheitsscheibe mit einer Auflagefläche (22) der Fensteröffnung verklebt ist, wobei zwischen der Sicherheitsscheibe und der Auflagefläche der Fensteröffnung ein umlaufendes viskoelastisches Dämpfungselement (20, 53) angeordnet ist, das Dämpfungselement umfassend einen elastischen Kunststoffkern (25, 63); eine scheibenseitige Klebeschicht (26) zwischen dem Kunststoffkern und der Sicherheitsscheibe; und eine fahrzeugseitige Klebeschicht (27) zwischen dem Kunststoffkern und der Auflagefläche, wobei die fahrzeugseitige Klebeschicht eine erste Schicht eines ersten Klebstoffs mit einer ersten Viskosität und eine zweite Schicht (28, 64) eines zweiten Klebstoffs mit einer zweiten Viskosität umfasst, die geringer ist als die erste Viskositöt.

Weiterhin werden ein Verfahren zur Herstellung und ein Nachrüstsatz für ein Fahrzeug vorgestellt.

## Beschreibung

Die Erfindung betrifft ein Fahrzeug mit einer Sicherheitsscheibe aus Kunststoff, die in eine Fensteröffnung des Fahrzeugs eingesetzt ist.

Die Erfindung betrifft weiterhin ein Verfahren zur Herstellung und einen Nachrüstsatz für ein entsprechendes Fahrzeug.

Sicherheitsscheiben aus Kunststoff werden seit längerer Zeit in Fahrzeugen verwendet, die im Einsatz besonders hohen Belastungen ausgesetzt sein können. Hierzu gehören neben Kraftfahrzeugen wie behördlichen Einsatzfahrzeugen und Bau- und Forstfahrzeugen auch Flurförderzfahreuge, Wasser- und Luftfahrzeuge wie Schnellboote, Flugzeuge und Helikopter.

Sicherheitsscheiben aus Kunststoff weisen gegenüber herkömmlichen Sicherheitsscheiben aus Glas mehrere Vorteile auf. Zum einen weisen diese eine wesentlich höhere Schlagzähigkeit auf, so dass sie beispielsweise unter der Einwirkung von Schlägen oder herabfallenden Gegenständen nicht so leicht brechen wie Glasscheiben. Ein weiterer Vorteil ist das im Vergleich mit Glasscheiben gleicher Widerstandskraft deutlich verringerte Gewicht der Sicherheitsscheiben aus Kunststoff.

Da Kunststoffscheiben allerdings deutlich kratzempfindlicher sind als Glasscheiben, sind sie in der Regel beidseitig mit einer kratzfesten Beschichtung versehen, beispielsweise auf Basis von Polysiloxan.

Als weitere Besonderheit weisen Sicherheitsscheiben aus Kunststoff zumeist einen deutlich höheren Wärmeausdehnungskoeffizienten auf als z.B. Glas oder Stahl.

Die Befestigung von Sicherheitsscheiben in der Fahrzeughülle erfolgt zumeist durch Verkleben, wobei zunächst ein flüssiger oder gelförmiger Klebstoff auf eine Anlagefläche in der Fensteröffnung des Fahrzeugs aufgetragen und dann die Sicherheitsscheibe eingelegt wird.

Für Sicherheitsscheiben aus Glas kann dabei ein relativ harter Klebstoff verwendet werden, der entsprechend schnell aushärtet. Die so hergestellten Klebeverbindungen sind zumeist schon nach wenigen Stunden hinreichend belastbar, so dass das Fahrzeug bewegt werden kann.

Für Sicherheitsscheiben aus Kunststoff müssen jedoch Klebstoffe verwendet werden, die auch nach dem Aushärten ausreichend flexibel sind, um das unterschiedliche Temperaturverhalten der Sicherheitsscheibe und der Fahrzeughülle ausgleichen zu können. Ein flexibles Verhalten des Klebstoffs ist ebenso erforderlich, um das elastische Ausfedern der Sicherheitsscheibe bei schlagartigen Belastungen auszugleichen.

Anders als harte Klebstoffe benötigen elastisch aushärtende Klebstoffe eine erheblich längere Zeit zum Aushärten, und sind zumeist erst nach einigen Tagen belastbar. Vorher kann schon eine einfache Bewegung des Fahrzeugs dazu führen, dass sich Mikrorisse in der Klebeschicht bilden und diese unbrauchbar wird. Insbesondere bei der Reparatur von Kraftfahrzeugen mit entsprechenden Sicherheitsscheiben aus Kunststoff ist dies nachteilig, da das zu reparierende Fahrzeug während dieser Zeit nicht genutzt werden kann.

Die EP0597624A1 und die DE102019120097 schlagen vor, Kunststoffscheiben mittels eines Klebebandes mit Acrylatkern mit der Karosserie zu verkleben. Hierbei kann der Acrylatkern des Klebebandes auftretende Spannungen und Schläge aufnehmen, so dass ein schnell bindender harter Klebstoff verwendet werden kann.

In doppelseitigen Klebebändern werden in der Regel Klebstoffe genutzt, welche eine recht hohe Viskosität aufweisen. Insbesondere bei der Verklebung zwischen dem Klebeband und einer Auflagefläche des Fahrzeugs kann dabei der Klebstoff aufgrund seiner hohen Viskosität nicht alle Unebenheiten in der Auflagefläche ausfüllen. Hierdurch kann es zu Undichtigkeiten in der Verklebung kommen, zusätzlich schwächen entstehende Kavitäten die Verklebung und beeinträchtigen die Dauerfestigkeit.

Ein in der US 2015/0030797 A1 veröffentlichtes Klebeband hat ein elastisches, innenliegendes Substrat bestehend aus einem in einem Nano-Netz gesponnenen Polymer und trägt auf beiden Seiten eine innenliegende und eine außenliegende Klebeschicht, wobei die äußere Klebeschicht eine geringere Viskosität als die innere aufweist.

Es besteht eine Aufgabe der Erfindung darin, ein Fahrzeug mit einer Sicherheitsscheibe aus Kunststoff bereitzustellen, welches hinsichtlich der beschriebenen Problematiken verbessert ist. Weitere Aufgaben der Erfindung bestehen darin, ein Verfahren zur Herstellung und einen Nachrüstsatz für ein entsprechendes Fahrzeug bereitzustellen, um das Fahrzeug mit einer Sicherheitsscheibe aus Kunststoff auszustatten.

Wenigstens eine der genannten Aufgaben wird gelöst durch ein Fahrzeug mit einer Sicherheitsscheibe aus Kunststoff, die in eine Fensteröffnung des Fahrzeugs eingesetzt ist, wobei die Sicherheitsscheibe mit einer Auflagefläche der Fensteröffnung verklebt ist, wobei zwischen der Sicherheitsscheibe und der Auflagefläche der Fensteröffnung ein umlaufendes viskoelastisches Dämpfungselement angeordnet ist, das Dämpfungselement umfassend einen elastischen Kunststoffkern; eine scheibenseitige Klebeschicht zwischen dem Kunststoffkern und der Sicherheitsscheibe; und eine fahrzeugseitige Klebeschicht zwischen dem Kunststoffkern und der Auflagefläche, welches dadurch weitergebildet ist, dass die fahrzeugseitige Klebeschicht eine erste Schicht eines ersten Klebstoffs mit einer ersten Viskosität und eine zweite Schicht eines zweiten Klebstoffs mit einer zweiten Viskosität umfasst, die geringer ist als die erste Viskosität.

Der zweite Klebstoff ist durch seine geringere Viskosität in der Lage, auch kleine Unebenheiten in der Auflagefläche des Fahrzeugs zu füllen. Dadurch wird die Entstehung von Undichtigkeiten und Kavitäten vermieden, so dass eine dichte und dauerfeste Verklebung bereitgestellt werden kann.

Im Rahmen der vorliegenden Offenbarung ist der Begriff "Viskosität" als Kennwert für die Fließfähigkeit des betroffenen Klebstoffs in der offenen Phase, also vor dem Abbinden, zu verstehen, wobei eine geringe Viskosität einer hohen Fließfähigkeit entspricht. Hierbei spielen absolute Viskositätswerte, welche von der verwendeten Messmethode abhängen, keine wesentliche Rolle. Vielmehr ist entscheidend, dass sich der erste Klebstoff und der zweite Klebstoff tatsächlich in Ihrer Fließfähigkeit unterscheiden, wobei der zweite Klebstoff eine höhere Fließfähigkeit aufweist. Bei Vergleich numerischer Viskositätswerte ist zu beachten, dass die zu vergleichenden Werte jeweils mit der gleichen Messmethode bestimmt werden, sofern beide Klebstoffe der gleichen Messmethode zugänglich sind. Bei stark voneinander abweichenden Viskositäten, welche die Verwendung der gleichen Messmethode nicht zulassen, erübrigt sich hingegen ein numerischer Vergleich.

Die fahrzeugseitige Klebeschicht kann dabei einen oder mehrere erste Flächenabschnitte umfassen, in welchen die nur die erste Schicht vorhanden ist, wobei die erste Schicht in direktem Kontakt mit dem Kunststoffkern und in direktem Kontakt mit der Auflagefläche steht, und einen oder mehrere zweite Flächenabschnitte umfassen, in welchen sowohl die erste als auch die zweite Schicht vorhanden sind, wobei die erste Schicht in direktem Kontakt mit dem Kunststoffkern und in direktem Kontakt mit der zweiten Schicht steht, und wobei die zweite Schicht in direktem Kontakt mit der ersten Schicht und in direktem Kontakt mit der Auflagefläche steht.

Der erste Klebstoff kann eine kürzere Abbindezeit aufweisen als der zweite Klebstoff. Als "Abbindezeit" ist in der vorliegenden Offenbarung die Zeit zu verstehen, nach welcher der betroffene Klebstoff seine Endfestigkeit bzw. einen vorgegebenen Anteil seiner Endfestigkeit erreicht. Sollen numerische Werte der Abbindezeit von Klebstoffen verglichen werden, ist natürlich für alle Klebstoffe der gleiche Anteil anzusetzen, wie beispielsweise 100%, 90%, 50%, etc.

Durch die unterschiedliche Abbindezeit kann der erste Klebstoff schnell eine mechanisch belastbare Verklebung der Sicherheitsscheibe mit dem Fahrzeug bereitstellen, bevor der zweite Klebstoff ausgehärtet ist.

Der zweite Klebstoff kann im fertigen Fahrzeug teilweise in mikroverkapselter Form vorliegen. Dabei kann der zweite Klebstoff vollständig in mikroverkapselter Form auf die Schicht des ersten Klebstoffs aufgetragen werden, so dass beim Andrücken der Sicherheitsscheibe an die Auflagefläche der Fensteröffnung Mikrokapseln aufbrechen und der zweite Klebstoff freigesetzt wird. Abhängig von der verwendeten Andrückkraft bleibt dabei ein Teil der Mikrokapseln intakt, ohne die Güte der Verklebung negativ zu beeinflussen.

Der Kunststoffkern des Dämpfungselements kann einen geschossenporig geschäumten Kunststoff, beispielsweise aus Acryl, umfassen. Die Klebstoffe können Reinacrylate umfassen.

Das Dämpfungselement kann ein doppelseitiges Klebeband umfassen, welches den Kunststoffkern, die scheibenseitige Klebeschicht und die erste Schicht der fahrzeugseitigen Klebeschicht umfasst. Solche doppelseitigen Klebebänder sind kommerziell verfügbar, z.B. von der Firma tesa unter der Bezeichnung "ACX".

Die Sicherheitsscheibe kann einen thermoplastischen Kunststoff umfassen, und ist bevorzugt eine aus mehreren Schichten aufgebaute Verbundscheibe.

Der Kunststoffkern des Dämpfungselements kann eine Reißdehnung von wenigstens 500%, bevorzugt wenigstens 800%, aufweisen. Weiterhin kann der Kunststoffkern Verstärkungselemente wie Fasern, Fasergelege, und/oder Fasergewebe enthalten.

Wenigstens eine der genannten Aufgaben wird weiterhin gelöst durch ein Verfahren zum Herstellen eines Fahrzeugs, mit den Schritten Bereitstellen einer Fahrzeughülle mit einer Fensteröffnung, welche eine Auflagefläche für eine Sicherheitsscheibe aufweist; Bereitstellen einer Sicherheitsscheibe; Bereitstellen eines doppelseitigen Klebebandes, bestehend aus einem flächigen Kunststoffkern, auf dessen gegenüberliegenden Seiten jeweils eine Klebstoffschicht eines ersten Klebstoffs aufgetragen ist; Aufbringen des Klebebandes auf die Sicherheitsscheibe, so dass eine erste Klebstoffschicht des Klebebandes als scheibenseitige Klebeschicht mit der Scheibe in Kontakt kommt und eine zweite Klebstoffschicht des Klebebandes offen bleibt; Auftragen einer Schicht eines zweiten Klebstoffs auf die offene Klebstoffschicht des Klebebandes, wobei die Viskosität des zweiten Klebstoffs geringer ist als die Viskosität des ersten Klebstoffs, und Einlegen der Sicherheitsscheibe in die Fensteröffnung des Fahrzeugs, so dass die Schicht des zweiten Klebstoffs mit der Auflagefläche in Kontakt kommt.

Das Verfahren kann weiterhin das Anpressen der Sicherheitsschiebe an die Auflagefläche umfassen, so dass die Schicht des zweiten Klebstoffs zumindest abschnittsweise aus dem Klebespalt verdrängt wird und der erste Klebstoff mit der Auflagefläche in Kontakt kommt.

Wenigstens eine der genannten Aufgaben wird weiterhin gelöst durch ein Verfahren zum Herstellen eines Fahrzeugs, mit den Schritten Bereitstellen einer Fahrzeughülle mit einer Fensteröffnung, welche eine Auflagefläche für eine Sicherheitsscheibe aufweist, Bereitstellen einer Sicherheitsscheibe, Bereitstellen eines doppelseitigen Klebebandes, bestehend aus einem flächigen Kunststoffkern, auf dessen gegenüberliegenden Seiten jeweils eine Klebstoffschicht eines ersten Klebstoffs aufgetragen ist, und auf dessen wenigstens einer Seite auf der Klebstoffschicht eine Schicht eines mikroverkapselten zweiten Klebstoffs aufgebracht ist, dessen Viskosität geringer ist als die Viskosität des ersten Klebstoffs; Aufbringen des Klebebandes auf die Sicherheitsscheibe, so dass eine erste Klebstoffschicht des Klebebandes als scheibenseitige Klebeschicht mit der Scheibe in Kontakt kommt und die zweite Klebstoffschicht des Klebebandes, welche den zweiten Klebstoff enthält, offen bleibt; Einlegen der Sicherheitsscheibe in die Fensteröffnung des Fahrzeugs, so dass die Schicht des zweiten Klebstoffs mit der Auflagefläche in Kontakt kommt; und Andrücken der Sicherheitsscheibe an die Auflagefläche, so dass die Mikrokapseln des zweiten Klebstoffs zumindest teilweise aufbrechen.

Die Andrückkraft kann dabei so gewählt sein, dass der zweite Klebstoff zumindest teilweise aus dem Klebespalt verdrängt wird und der erste Klebstoff mit der Auflagefläche in Kontakt kommt.

Wenigstens eine der genannten Aufgaben wird zudem gelöst durch ein Nachrüstsatz für eine Fahrzeugscheibe, umfassend eine Sicherheitsscheibe und ein auf die Sicherheitsscheibe aufgebrachtes doppelseitiges Klebeband, wobei das Klebeband auf der von der Sicherheitsscheibe abgewandten Seite eine erste Schicht eines ersten Klebstoffs und eine auf die erste Schicht aufgebrachte zweite Schicht eines mikroverkapselten zweiten Klebstoffs aufweist, wobei der zweite Klebstoff eine geringere Viskosität aufweist als der erste Klebstoff.

Die zweite Schicht kann dabei durch einen Schutzstreifen abgedeckt sein.

Die Erfindung wird nachfolgend anhand einiger exemplarischer Zeichnungen näher erläutert. Dabei sollen die dargestellten Ausführungsbeispiele lediglich zum besseren Verständnis der Erfindung beitragen, ohne diese einzuschränken.

Es zeigen:
Fig. 1: Ein Kraftfahrzeug,
Fig. 2: eine Sicherheitsscheibe in einer Draufsicht,
Fig. 3: eine Schnittdarstellung einer montierten Sicherheitsscheibe,
Fig. 4: einen Nachrüstsatz in einer Draufsicht,
Fig. 5: eine Schnittdarstellung eines Nachrüstsatzes.

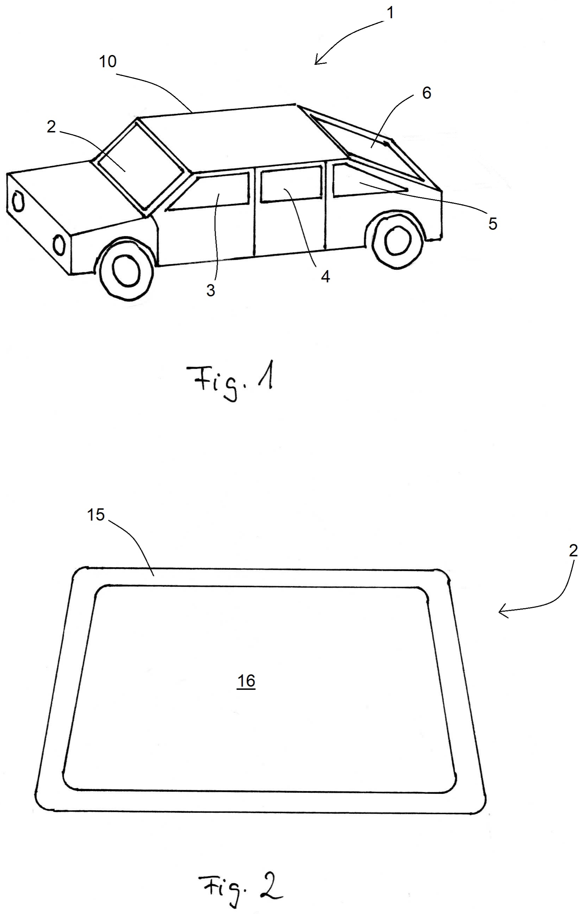

In Figur 1 ist ein Kraftfahrzeug 1 dargestellt, bei welchem es sich beispielsweise um ein behördliches Einsatzfahrzeug wie einen Polizei-Streifenwagen handeln kann. Die Darstellung des Kraftfahrzeugs 1 erfolgt hier lediglich exemplarisch. Andere, nicht dargestellte Ausführungen können auch Wasserfahrzeuge wie Schnellboote oder Luftfahrzeuge wie Flugzeuge oder Helikopter umfassen.

Das Kraftfahrzeug 1 ist mit mehreren Sicherheitsscheiben ausgerüstet, bei denen es sich um eine Frontscheibe 2, eine vordere Seitenscheibe 3, eine mittlere Seitenscheibe 4, eine hintere Seitenscheibe 5 und eine Heckscheibe 6 handelt. Weitere Sicherheitsscheiben des Kraftfahrzeugs 1 sind in der Figur 1 nicht sichtbar.

Die Sicherheitsscheiben 2, 3, 4, 5, 6 sind aus thermoplastischem Kunststoff hergestellt, beispielsweise aus Polycarbonat (PC) oder Polymethylmethacrylat (PMMA). Sicherheitsscheiben aus thermoplastischen Kunststoffen haben gegenüber früher verwendeten Glasscheiben den Vorteil, dass diese deutlich widerstandsfähiger gegen mechanische Belastungen sind. Hierbei werden vielfach Verbundscheiben eingesetzt, in denen mehrere Schichten gleicher oder unterschiedlicher Kunststoffe vorgesehen sind.

Da thermoplastische Kunststoffe allerdings eine deutlich geringere Härte als Glas aufweisen, sind entsprechende Scheiben von sich aus kratzempfindlich. Daher sind Sicherheitsscheiben aus thermoplastischen Kunststoffen üblicherweise mit kratzfesten Beschichtungen versehen, beispielsweise auf Basis von Polysiloxan.

Die Sicherheitsscheiben 2, 3, 4, 5, 6 sind in eine Karosserie 10 des Kraftfahrzeugs 1 eingeklebt. Anders als bei Glasscheiben muss die Verklebung zwischen den Sicherheitsscheiben 2, 3, 4, 5, 6 und der Karosserie 10 eine gewisse Flexibilität aufweisen, da der thermoplastische Kunststoff einerseits einen deutlich höhere Wärmeausdehnungskoeffizienten aufweist als das Material der Karosserie, zumeist Stahl, und andererseits bei mechanischer Belastung deutlich mehr ausfedert als Glasscheiben.

Figur 2 zeigt die Sicherheitsscheibe 2 in einer Draufsicht. Am äußeren Rand der Sicherheitsscheibe 2 ist eine schwarze Maskierung 15 aufgebracht, welche sich vom Rand der Sicherheitsscheibe 2 in Richtung eines inneren Durchsichtbereichs 16 erstreckt. Obwohl die Maskierung 15 in Figur 2 mit einer scharfen Begrenzung dargestellt ist, kann sie stattdessen in einem geeigneten Raster, z.B. einem variierenden Punktraster, auslaufen.

Die Sicherheitsscheibe 2 kann leicht gekrümmt sein, was in der Figur 2 nicht erkennbar ist. Die Sicherheitsscheiben 3, 4, 5, 6 können ebenfalls gekrümmt oder plan sein.

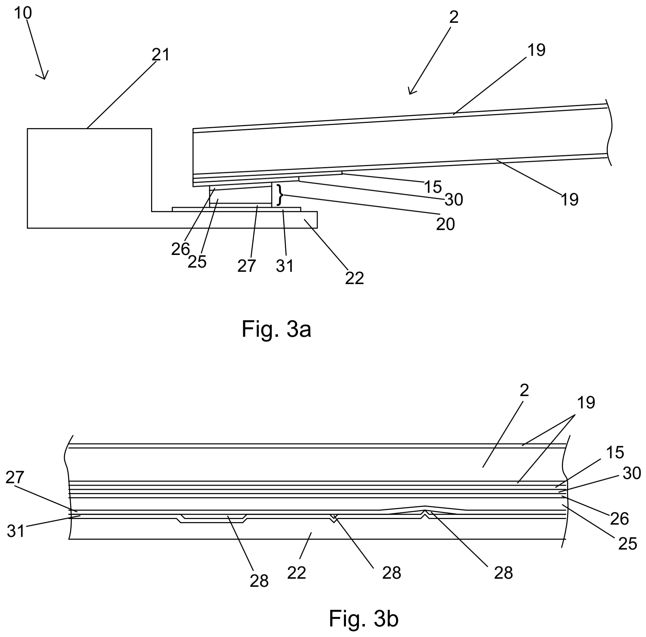

Figur 3a zeigt einen Querschnitt durch die Sicherheitsscheibe 2 im montierten Zustand. Hierbei ist eine zum Innenraum des Kraftfahrzeugs 1 gerichtete Innenseite der Sicherheitsscheibe 2 unten dargestellt, während eine Außenseite der Sicherheitsscheibe 2 oben dargestellt ist. Während die Sicherheitsscheibe 2 in Fig. 3a als einlagige Sicherheitsscheibe dargestellt ist, kann diese auch mehrere Lagen unterschiedlicher oder gleicher Kunststoffe umfassen.

Es ist erkennbar, dass die Sicherheitsscheibe 2 beidseitig mit einer kratzfesten Beschichtung 19 versehen ist, welche sich bis an einen äußersten Rand der Sicherheitsscheibe 2 erstreckt. An der Innenseite der Sicherheitsscheibe 2 ist auf die Beschichtung 19 die Maskierung 15 aufgetragen. Die Maskierung 15 kann beispielsweise aus Polyurethan (PU) bestehen oder solches beinhalten. Im äußeren Randbereich der Sicherheitsscheibe 2 ist die Maskierung 15 durchgehend aufgetragen, in Richtung des Durchsichtbereichs 16 kann sie zur Bildung eines auslaufenden Punktrasters durchbrochen sein.

Die Sicherheitsscheibe 2 ist mittels eines Klebebandes 20 mit der Karosserie 10 verklebt, von welcher in der Figur 3a nur ein Ausschnitt eines Holms 21 mit einer Anlagefläche 22 für die Sicherheitsscheibe 2 dargestellt ist.

Das Klebeband 20 besteht aus einem viskoelastischen Kunststoffkern 25 mit beidseitig aufgetragenen Klebstoffschichten 26, 27. Die Dicke des Kunststoffkerns 25 kann etwa 40% - 60% der Dicke der Sicherheitsscheibe 2 betragen. Der Kunststoffkern 25 des Klebebandes 20 kann beispielsweise aus geschäumtem Acrylat bestehen. Vorzugsweise ist der Kunststoffkern 25 dabei geschlossenporig geschäumt. Die Klebstoffschichten 26, 27 können aus Reinacrylat bestehen.

Das Klebeband 20 ist im dargestellten Beispiel vollständig im Bereich der Maskierung 15 angeordnet. Es ist dadurch von der Außenseite der Sicherheitsscheibe 2 nicht zu sehen. Von der Innenseite der Sicherheitsscheibe 2 her ist das Klebeband 20 durch die Anlagefläche 22 verdeckt. Zusätzlich kann hier eine nicht dargestellte Innenverkleidung den Holm 21 und die Anlagefläche 22 verdecken.

Um die Haftung zwischen der Klebstoffschicht 26 und der Maskierung 15 der Sicherheitsscheibe 2 zu optimieren ist auf die Maskierung 16 eine Schicht 30 eines Haftvermittlers aufgetragen. Der Haftvermittler ist so ausgewählt, dass er sowohl zu der Klebstoffschicht 26 als auch zu der Maskierung 15 eine bessere Haftung aufweist als die Klebstoffschicht 26 direkt auf der Maskierung 15. Geeignete Haftvermittler werden in der Regel von den Anbietern von Klebebändern für unterschiedlichste Materialpaarungen bereitgestellt. Zwischen der Klebstoffschicht 27 und der Anlagefläche 22 kann eine weitere Schicht 31 eines Haftvermittlers aufgetragen sein. Dabei kann es sich um den gleichen Haftvermittler wie in der Schicht 30 oder um einen anderen Haftvermittler handeln.

Es ist in der Figur 3 erkennbar, dass die Schicht 30 des Haftvermittlers breiter ist als die Klebstoffschicht 26 des Klebebandes 20. Dies dient dazu, an der fertig montierten Sicherheitsscheibe 2 ohne weiteres prüfen zu können, ob der Haftvermittler ordnungsgemäß aufgetragen wurde. Eine solche Prüfung kann im Rahmen einer regulären Qualitätskontrolle erfolgen oder bei einer Ursachenermittlung im Schadensfall.

Um die Prüfung weiter zu vereinfachen ist der Haftvermittler in der Schicht 30 mit optisch erkennbaren Markern versehen. Dies kann ein gewöhnlicher Farbstoff sein, der jedoch das optische Erscheinungsbild der Sicherheitsscheibe 2 beeinträchtigen kann. Bevorzugt wird daher ein unter normaler Beleuchtung unsichtbarer Marker verwendet, wie z.B. unter UV-Beleuchtung fluoreszierende Pigmente. Zur Prüfung kann dann mit einer handelsüblichen UV-Lampe der Randbereich des Klebebandes 20 abgeleuchtet werden.

In Fig. 3b ist die Verklebung zwischen Sicherheitsscheibe 2 und Karosserie 10 in einem Schnitt entlang der Längsrichtung des Klebebandes 20 dargestellt. Es ist zu erkennen, dass die Oberfläche der Anlagefläche 22 Unebenheiten aufweist, welche material- oder fertigungsbedingt sein können. Mögliche Ursachen hierfür sind aneinanderstoßende Bauteile, Schweißnähte, oder ähnliches. Die Haftvermittlerschicht 30 wird sehr dünnflüssig aufgetragen und verfüllt diese Unebenheiten daher nicht oder nicht vollständig.

Um die Dichtigkeit und Dauerfestigkeit der Verklebung zu verbessern, ist auf die fahrzeugseitige Klebstoffschicht 27 eine weitere Schicht 28 eines zweiten Klebstoffes aufgetragen, welcher im offenen Zustand eine geringere Viskosität aufweist als der Klebstoff der Klebstoffschicht 27. Beim Andrücken der Sicherheitsscheibe 2 an die Anlagefläche wird diese weitere Schicht 28 größtenteils aus dem Klebespalt verdrängt, bleibt aber im Bereich der Unebenheiten der Anlagefläche vorhanden und füllt somit zwischen der Klebeschicht 27 und der Anlagefläche entstehende Hohlräume auf. Eine Schwächung der Verklebung durch diese Hohlräume wird somit verhindert. Die Schicht 28 ist somit nicht im gesamten Flächenbereich der Verklebung vorhanden, sondern nur in einzelnen Flächenabschnitten. In andern Flächenabschnitten ist lediglich die Klebstoffschicht 27 vorhanden.

Zum Herstellen der Verklebung zwischen der Sicherheitsscheibe 2 und der Karosserie 10 werden zunächst die Karosserie 10, die Sicherheitsscheibe 2 mit und das Klebeband 20 separat bereitgestellt, wobei die Sicherheitsscheibe 2 und die Anlagefläche 22 der Karoserie 10 bereits mit Haftvermittler behandelt sind. Dann wird das Klebeband 20 Bereich der Maskierung 15 auf die Sicherheitsscheibe 2 aufgebracht. Anschließend wird die Schicht 28 des zweiten Klebstoffs auf die offene Klebstoffschicht 27 aufgetragen, bevor die Sicherheitsscheibe 2 auf die Auflagefläche 22 der Karosserie aufgelegt und angedrückt wird.

Breite und Dicke des Klebebandes 20 werden in Abhängigkeit von den Dimensionen der Sicherheitsscheibe gewählt, wie beispielsweise in der Patentanmeldung DE102019120097A1 beschrieben.

Als zweiter Klebstoff kann beispielsweise ein Urethan-basierter Klebstoff wie Teroson^{®} Bond 120 der Fa. Henkel verwendet werden. Bezogen auf eine Breite des Klebebandes 20 von 15 mm kann hierbei eine Anpresskraft von ca. 1kN pro Meter Lauflänge des Klebebandes aufgewendet werden, um die Sicherheitsscheibe 2 an die Auflagefläche 22 zu drücken. Dabei wird der zweite Klebstoff nahezu vollständige aus dem Klebespalt gepresst und verbleibt nur in Unebenheiten der Auflagefläche. Im überwiegenden Teil der Kontaktfläche kommt der erste Klebstoff in direkten Kontakt mit der Auflagefläche.

Die schnell aushärtende erste Klebstoffschicht 27 stellt bereits nach wenigen Minuten eine Haltekraft von 1,2 kN/m bereit, was ausreichend ist, um die Scheibe in Position zu halten. Nach einer kurzen Aushärtezeit von 120 Minuten stellt die Verklebung eine Haltekraft von 9kN/m bereit, was für die Verwendung des Kraftfahrzeugs ausreichend ist. Eine volle Aushärtung des Klebeverbunds mit einer Belastbarkeit von 60kN/m ist nach ca. 24h erreicht.

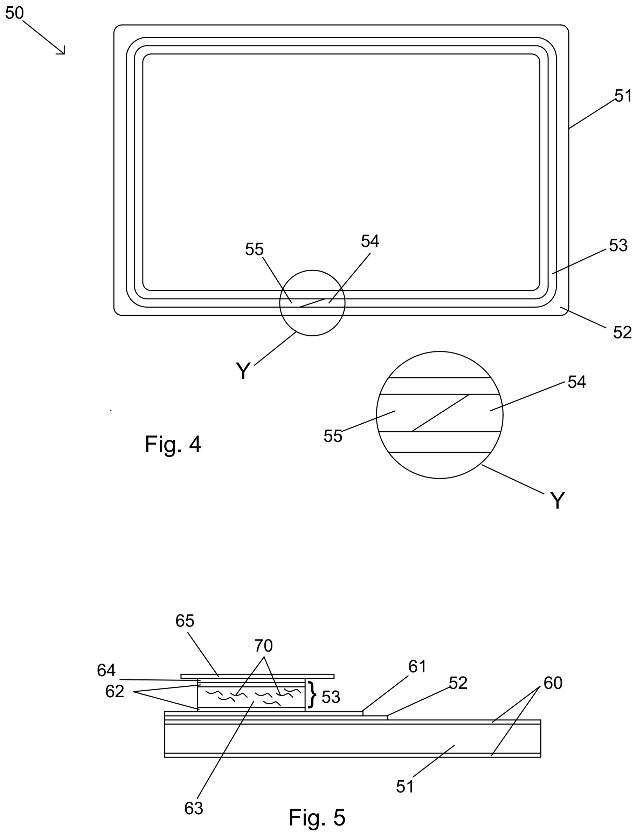

In Figur 4 ist ein Nachrüstsatz 50 für ein Kraftfahrzeug mit einer Sicherheitsscheibe 51 in einer Draufsicht dargestellt. Bei der Sicherheitsscheibe 51 kann es sich beispielsweise um einen Ersatz für die Sicherheitsscheibe 4 des Kraftfahrzeugs 1 handeln, wenn diese durch äußere Einwirkung beschädigt wurde. Die Figur 4 zeigt den Nachrüstsatz 50 aus Richtung des Innenraums des Kraftfahrzeugs 1.

Der Nachrüstsatz 50 umfasst die Sicherheitsscheibe 51, welche ähnlich wie die Sicherheitsscheibe 2 aus einem thermoplastischen Kunststoff besteht. Im Randbereich der Sicherheitsscheibe 51 ist ebenfalls eine Maskierung 52 aufgetragen.

In dem Bereich der Maskierung 52 ist ein einstückiger umlaufender Streifen 53 eines viskoelastischen Klebebandes aufgebracht, um die Sicherheitsscheibe 51 in die Karosserie 10 des Kraftfahrzeugs 1 einzukleben.

Der Streifen 53 ist aus einem geraden Abschnitt des Klebebandes geformt. Die Elastizität des Kunststoffkerns des Klebebandes erlaubt es, dies im Bereich der Ecken der Sicherheitsscheibe 51 entlang einer gebogenen Linie aufzubringen, ohne dass sich Verwerfungen bilden. Dabei kann der Streifen 51 im Bereich der Ecken mit einem Krümmungsradius aufgebracht sein, der größer ist als der Radius der Ecken der Sicherheitsscheibe 51.

Die Enden 54, 55 des Streifens 53 sind in einer Stoßstelle aneinandergelegt. Die Schnitte der Enden 54, 55 verlaufen dabei in einem Winkel von etwa 45° zu der Längsrichtung des Streifens 53 im Bereich der Stoßstelle. Der Winkel kann auch andere Werte, vorzugsweise jedoch etwa zwischen 30° und 60°, betragen. Durch den Winkel wird eine sich zwischen den Enden 54, 55 bildende Kriechstrecke für Feuchtigkeit und schädliche Gase verlängert. Zu spitze Winkel würden jedoch die Stabilität der Enden 53, 54 beeinträchtigen und somit das Aufbringen des Streifens 52 erschweren.

Die Enden 54, 55 des Streifens 53 sind an der Stoßstelle vorzugsweise mit leichtem Übermaß zusammengefügt. Dabei wird der Streifen 53 im Bereich der Stoßstelle in Längsrichtung etwas gestaucht, wodurch die Enden 54, 55 dicht aneinandergedrückt werden. Hierdurch kann eine besonders gute Abdichtung erzielt werden, wobei die Elastizität des Klebebandes eine Faltenbildung verhindert.

In Figur 5 ist eine Schnittdarstellung eines Ausschnitts des Nachrüstsatzes 50 dargestellt. Der Nachrüstsatz 50 umfasst wiederum die Sicherheitsscheibe 51 mit beidseitig aufgebrachter kratzfester Beschichtung 60.

Auf der in Richtung Innenraum des Kraftfahrzeugs 1 gerichteten Seite der Sicherheitsscheibe 51, die in Figur 5 oben ist, ist die Maskierung 52 aufgetragen. Die Ausführung der Maskierung 52 kann dabei der Ausführung der Maskierung 15 in Figur 3 entsprechen.

Auf der Maskierung 52 ist eine Schicht 61 eines Haftvermittlers aufgetragen, darüber ist der Streifen 53 des Klebebandes angebracht. Die Schicht 61 des Haftvermittlers ist breiter als der Streifen 53 und ragt daher auf beiden Seiten unter diesem hervor. Der Haftvermittler ist mit unter UV-Beleuchtung fluoreszierenden Pigmenten versetzt, so dass er unter Einsatz einer handelsüblichen UV-Lampe nachgewiesen werden kann.

Der Streifen 53 des Klebebandes besteht wiederum aus zwei Klebstoffschichten 62 eines ersten Klebstoffs mit einem dazwischen angeordneten Kunststoffkern 63. Auf der von der Scheibe 51 abgewandten Seite weist das Klebeband eine zweite Schicht 64 eines zweiten Klebstoffs auf. Der zweite Klebstoff ist in diesem Fall ein mikroverkapselter Klebstoff mit einer geringeren Viskosität als der erste Klebstoff.

Die zweite Schicht 64 auf der oberen Seite des Streifens 53 ist durch einen Schutzstreifen 65 abgedeckt. Der Schutzstreifen 65 kann beispielsweise aus Papier oder einem Kunststoff bestehen, der mit dem Klebstoff der Klebstoffschicht 62 keine feste Verbindung eingeht. Der Schutzstreifen 65 schützt die zweite Klebstoffschicht 64 von dem Austrocknen und vor dem Anhaften von Staub- oder Schmutzpartikeln, welche die Qualität der Verklebung beeinträchtigen könnten.

Die Breite des Schutzstreifens 65 ist vorzugsweise etwas größer als die Breite des Streifens 53. Dadurch werden einerseits die Ränder der zweiten Klebstoffschicht 64 vor dem Austrocknen geschützt, andererseits lässt sich der Schutzstreifen 65 dann besser greifen, um ihn vor der Montage des Nachrüstsatzes 50 abzuziehen.

In der hier dargestellten Ausführung ist der Kunststoffkern 63 des Klebebandes 53 mit Verstärkungselementen 70 versehen. Hierbei kann es sich um Fasern oder Fasergeflechte handeln.

Um den Nachrüstsatz 50 in einem Kraftfahrzeug zu installieren muss ggf. eine alte Scheibe aus der Karosserie 10 entfernt werden. Dabei sollten auch alte Klebstoffreste vollständig beseitigt werden.

Anschließend wird die Auflagefläche 22 der Karosserie gereinigt und vorzugsweise mit einem Haftvermittler behandelt.

Zuletzt muss lediglich der Schutzstreifen 65 von dem Streifen 53 abgezogen werden, bevor die Sicherheitsscheibe 51 des Nachrüstsatzes 50 auf die Auflagefläche 22 aufgelegt und angepresst wird. Das Auflegen der Sicherheitsscheibe 51 erfolgt vorzugsweise unter Benutzung von Abstandslehren, um einen allseitig gleichen Abstand eines Randes der Sicherheitsscheibe 51 zu Karosserieelementen wie dem Holm 21 zu gewährleisten.

Bei dem Anpressen der Sicherheitsscheibe 51 an die Auflagefläche 22 werden die meisten Mikrokapseln des zweiten Klebstoffs aufgebrochen, so dass dieser freigesetzt wird. Ggf. nicht aufgebrochene Mikrokapseln beeinträchtigen die Klebewirkung nicht merklich. Durch weiteres Anpressen wird wieder der zweite Klebstoff größtenteils aus dem Klebespalt verdrängt und verbleibt lediglich in Unebenheiten.

## Patentansprüche

1. Fahrzeug (1) mit einer Sicherheitsscheibe (2, 3, 4, 5, 6, 51) aus Kunststoff, die in eine Fensteröffnung des Fahrzeugs (1) eingesetzt ist, wobei die Sicherheitsscheibe (2, 3, 4, 5, 6, 51) mit einer Auflagefläche (22) der Fensteröffnung verklebt ist,
wobei zwischen der Sicherheitsscheibe (2, 3, 4, 5, 6, 51) und der Auflagefläche (22) der Fensteröffnung ein umlaufendes viskoelastisches Dämpfungselement (20, 53) angeordnet ist, das Dämpfungselement (20, 53) umfassend:
- einen elastischen Kunststoffkern (25, 63),
- eine scheibenseitige Klebeschicht (26) zwischen dem Kunststoffkern (25, 63) und der Sicherheitsscheibe (2, 3, 4, 5, 6, 51), und
- eine fahrzeugseitige Klebeschicht (27) zwischen dem Kunststoffkern (25, 63) und der Auflagefläche (22),
**dadurch gekennzeichnet, dass** die fahrzeugseitige Klebeschicht (27)
- eine erste Schicht (27) eines ersten Klebstoffs mit einer ersten Viskosität und
- eine zweite Schicht (28, 64) eines zweiten Klebstoffs mit einer zweiten Viskosität umfasst, die geringer ist als die erste Viskosität.

2. Fahrzeug nach Anspruch 1, **dadurch gekennzeichnet, dass** die fahrzeugseitige Klebeschicht (27)
- einen oder mehrere erste Flächenabschnitte umfasst, in welchen die nur die erste Schicht (27) vorhanden ist, wobei die erste Schicht (27) in direktem Kontakt mit dem Kunststoffkern (25, 63) und in direktem Kontakt mit der Auflagefläche (22) steht, und
- einen oder mehrere zweite Flächenabschnitte umfasst, in welchen sowohl die erste (27) als auch die zweite Schicht (28, 64) vorhanden sind, wobei die erste Schicht (27) in direktem Kontakt mit dem Kunststoffkern (25, 63) und in direktem Kontakt mir der zweiten Schicht (28, 64) steht, und wobei die zweite Schicht (28, 64) in direktem Kontakt mit der ersten Schicht (27) und in direktem Kontakt mit der Auflagefläche (22) steht.

3. Fahrzeug nach Anspruch 1 oder 2, **dadurch gekennzeichnet, dass** der erste Klebstoff eine kürzere Abbindezeit aufweist als der zweite Klebstoff.

4. Fahrzeug nach einem der Ansprüche 1 bis 3, **dadurch gekennzeichnet, dass** der zweite Klebstoff teilweise in mikroverkapselter Form vorliegt.

5. Fahrzeug nach einem der Ansprüche 1 bis 4, **dadurch gekennzeichnet, dass** der Kunststoffkern (25, 63) einen geschlossenporig geschäumten Kunststoff umfasst.

6. Fahrzeug nach einem der Ansprüche 1 bis 5, **dadurch gekennzeichnet, dass** das Dämpfungselement (20, 53) ein doppelseitiges Klebeband (20, 53) umfasst, welches den Kunststoffkern (25, 63), die scheibenseitige Klebeschicht (26) und die erste Schicht (27) der fahrzeugseitigen Klebeschicht (27) umfasst.

7. Fahrzeug nach einem der vorangehenden Ansprüche, **dadurch gekennzeichnet, dass** die Sicherheitsscheibe (2, 3, 4, 5, 6, 51) einen thermoplastischen Kunststoff umfasst.

8. Fahrzeug nach einem der vorangehenden Ansprüche, **dadurch gekennzeichnet, dass** die Sicherheitsscheibe (2, 3, 4, 5, 6, 51) eine aus mehreren Schichten aufgebaute Verbundscheibe ist.

9. Fahrzeug nach einem der vorangehenden Ansprüche, **dadurch gekennzeichnet, dass** der Kunststoffkern (25, 63) eine Reißdehnung von wenigstens 500%, bevorzugt wenigstens 800%, aufweist.

10. Fahrzeug nach einem der vorangehenden Ansprüche, **dadurch gekennzeichnet, dass** der Kunststoffkern (25, 63) Verstärkungselemente (70) enthält.

11. Fahrzeug nach Anspruch 10, **dadurch gekennzeichnet, dass** die Verstärkungselemente (70) Fasern, Fasergelege, und/oder Fasergewebe umfassen.

12. Verfahren zum Herstellen eines Fahrzeugs, mit den Schritten:
- Bereitstellen einer Fahrzeughülle (10) mit einer Fensteröffnung, welche eine Auflagefläche (22) für eine Sicherheitsscheibe (2, 3, 4, 5, 6, 51) aufweist,
- Bereitstellen einer Sicherheitsscheibe (2, 3, 4, 5, 6, 51),
- Bereitstellen eines doppelseitigen Klebebandes (20, 53), bestehend aus einem flächigen Kunststoffkern (25, 63), auf dessen gegenüberliegenden Seiten jeweils eine Klebeschicht (26, 27, 62) eines ersten Klebstoffs aufgetragen ist,
- Aufbringen des Klebebandes (20, 53) auf die Sicherheitsscheibe (2, 3, 4, 5, 6, 51), so dass eine erste Klebeschicht (26, 62) des Klebebandes (20, 53) als scheibenseitige Klebeschicht mit der Scheibe (2, 3, 4, 5, 6, 51) in Kontakt kommt und eine zweite Klebeschicht (27, 62) des Klebebandes (20, 53) offen bleibt,
- Auftragen einer Schicht (28, 64) eines zweiten Klebstoffs auf die offene Klebeschicht (27, 62) des Klebebandes (20, 53), wobei die Viskosität des zweiten Klebstoffs geringer ist als die Viskosität des ersten Klebstoffs, und
- Einlegen der Sicherheitsscheibe (2, 3, 4, 5, 6, 51) in die Fensteröffnung des Fahrzeugs (1), so dass die Schicht (28, 64) des zweiten Klebstoffs mit der Auflagefläche (22) in Kontakt kommt.

13. Verfahren nach Anspruch 12, mit dem zusätzlichen Schritt:
- Anpressen der Sicherheitsschiebe (2, 3, 4, 5, 6, 51) an die Auflagefläche (22), so dass die Schicht (28, 64) des zweiten Klebstoffs zumindest abschnittsweise aus dem Klebespalt verdrängt wird und der erste Klebstoff mit der Auflagefläche (22) in Kontakt kommt.

14. Verfahren zum Herstellen eines Fahrzeugs, mit den Schritten:
- Bereitstellen einer Fahrzeughülle (10) mit einer Fensteröffnung, welche eine Auflagefläche (22) für eine Sicherheitsscheibe (2, 3, 4, 5, 6, 51) aufweist,
- Bereitstellen einer Sicherheitsscheibe (2, 3, 4, 5, 6, 51),
- Bereitstellen eines doppelseitigen Klebebandes (20, 53), bestehend aus einem flächigen Kunststoffkern (25, 63), auf dessen gegenüberliegenden Seiten jeweils eine Klebeschicht (26, 27, 62) eines ersten Klebstoffs aufgetragen ist, und auf dessen wenigstens einer Seite auf der Klebeschicht (27, 62) eine Schicht (28, 64) eines mikroverkapselten zweiten Klebstoffs aufgebracht ist, dessen Viskosität geringer ist als die Viskosität des ersten Klebstoffs,
- Aufbringen des Klebebandes (20, 53) auf die Sicherheitsscheibe (2, 3, 4, 5, 6, 51), so dass eine erste Klebeschicht (26, 27, 62) des Klebebandes (20, 53) als scheibenseitige Klebeschicht mit der Scheibe (2, 3, 4, 5, 6, 51) in Kontakt kommt und die zweite Klebeschicht (28, 64) des Klebebandes (20, 53), welche den zweiten Klebstoff enthält, offen bleibt,
- Einlegen der Sicherheitsscheibe (2, 3, 4, 5, 6, 51) in die Fensteröffnung des Fahrzeugs (1), so dass die Schicht (28, 64) des zweiten Klebstoffs mit der Auflagefläche (22) in Kontakt kommt, und
- Andrücken der Sicherheitsscheibe (2, 3, 4, 5, 6, 51) an die Auflagefläche (22), so dass die Mikrokapseln des zweiten Klebstoffs zumindest teilweise aufbrechen.

15. Verfahren nach Anspruch 14, wobei die Andrückkraft so gewählt ist, dass der zweite Klebstoff zumindest teilweise aus dem Klebespalt verdrängt wird und der erste Klebstoff mit der Auflagefläche (22) in Kontakt kommt.

16. Nachrüstsatz für eine Fahrzeugscheibe, umfassend eine Sicherheitsscheibe (2, 3, 4, 5, 6, 51) und ein auf die Sicherheitsscheibe aufgebrachtes doppelseitiges Klebeband (20, 53), wobei das Klebeband (20, 53) auf der von der Sicherheitsscheibe (2, 3, 4, 5, 6, 51) abgewandten Seite eine erste Schicht (27, 62) eines ersten Klebstoffs und eine auf die erste Schicht aufgebrachte zweite Schicht (28, 64) eines mikroverkapselten zweiten Klebstoffs aufweist, wobei der zweite Klebstoff eine geringere Viskosität aufweist als der erste Klebstoff.

17. Nachrüstsatz nach Anspruch 16, wobei die zweite Schicht (28, 64) durch einen Schutzstreifen (65) abgedeckt ist.
